(19) Europäisches Patentamt
European Patent Office
Office européen des brevets

(11) **EP 2 260 290 B1**

(12) **EUROPÄISCHE PATENTSCHRIFT**

(45) Veröffentlichungstag und Bekanntmachung des Hinweises auf die Patenterteilung:
**03.11.2021 Patentblatt 2021/44**

(21) Anmeldenummer: **09729364.1**

(22) Anmeldetag: **09.04.2009**

(51) Int Cl.:
**G01N 21/49** *(2006.01)*

(86) Internationale Anmeldenummer:
**PCT/EP2009/054322**

(87) Internationale Veröffentlichungsnummer:
**WO 2009/125003 (15.10.2009 Gazette 2009/42)**

(54) **VERFAHREN UND VORRICHTUNG ZUR TRÜBUNGSMESSUNG**

METHOD AND APPARATUS FOR MEASURING TURBIDITY

PROCÉDÉ ET DISPOSITIF DE MESURE DE TURBIDITÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **11.04.2008 DE 102008018592**

(43) Veröffentlichungstag der Anmeldung:
**15.12.2010 Patentblatt 2010/50**

(73) Patentinhaber: **Endress + Hauser Conducta GmbH+Co. KG**
**70839 Gerlingen (DE)**

(72) Erfinder:
• **FRANK, Rüdiger**
**72401 Haigerloch (DE)**
• **ANDELIC, Edin**
**70197 Stuttgart (DE)**

(74) Vertreter: **Andres, Angelika Maria**
**Endress+Hauser Group Services (Deutschland) AG+Co. KG**
**Colmarer Straße 6**
**79576 Weil am Rhein (DE)**

(56) Entgegenhaltungen:
**EP-A- 0 707 247        WO-A-01/63253**
**DE-A1- 2 363 432       GB-A- 2 355 524**
**US-A- 5 012 119        US-A- 5 416 581**
**US-A1- 2006 061 765    US-B1- 6 331 704**

**Beschreibung**

Die Erfindung betrifft ein Verfahren und eine Vorrichtung zur Trübungsmessung. Dieses Verfahren bzw. diese Vorrichtung kann in einem gasförmigen oder einem flüssigen Messmedium angewendet werden.

Trübung entsteht in Gasen oder Flüssigkeiten durch die Anwesenheit disperser Stoffe. Die Trübung kann durch die Wechselwirkung zwischen elektromagnetischer Strahlung mit dem Messmedium bestimmt werden, zum Beispiel entweder durch Messung der Intensitätsschwächung eines das Medium durchdringenden Lichtsignals (Turbidimetrie) oder durch Messung der Intensität von an den dispersen Teilchen gestreutem Licht (Nephelometrie). Bei der Nephelometrie wird die Intensität des gestreuten Lichts in einem Winkel, beispielsweise 90°, zu einem von einem Emitter ausgestrahlten Messlichtstrahl bestimmt.

Unter "Licht" wird hier und im Folgenden nicht nur elektromagnetische Strahlung des sichtbaren Spektralbereichs, sondern elektromagnetische Strahlung jedweder Wellenlänge, insbesondere im infraroten Wellenlängenbereich verstanden.

Es ist in diesem Zusammenhang bekannt, als Emitter und als Detektoren Dioden einzusetzen. Dabei wird als Emitter eine Leuchtdiode zur Erzeugung eines in einem geeigneten Wellenlängenbereich liegenden Messlichtstrahls (z.B. Infrarotstrahlung zwischen 800 und 900 nm) verwendet. Als Detektor kann entsprechend eine Photodiode eingesetzt werden, die aus dem empfangenen Streulicht ein Detektorsignal, beispielsweise einen Photostrom oder eine Photospannung, erzeugt. Die Signalstärke des Detektorsignals, hier die Photostromstärke bzw. die Größe der Photospannung, hängt von der Größe der auf die Detektordiode auftreffenden Lichtintensität, also bei der Nephelometrie von der Streulichtintensität ab. Diese korreliert wiederum unmittelbar mit der Teilchengröße und der Konzentration der dispersen Stoffe.

Aus dem Detektorsignal lässt sich somit ein Trübungswert des zu untersuchenden Messmediums bestimmen. Dieser Trübungswert hängt wegen der Mehrfachstreuung in trüben Medien nicht linear von der Konzentration der dispersen Stoffe, im Folgenden auch als Feststoffkonzentration bezeichnet, ab. Um einem Trübungswert daher eine Feststoffkonzentration zuordnen zu können, muss eine Kalibration, beispielsweise mittels eines Vergleichs mit einer Standardlösung vorgenommen werden.

Bei Trübungsmessungen in stark getrübten Messmedien, beispielsweise in Schlämmen einer Kläranlage, können Störungen der Messung, wie zum Beispiel durch Verschmutzung des Trübungssensors oder durch Bauteilschwankungen eine Verfälschung der Messergebnisse verursachen.

Bei bekannten Verfahren zur Trübungsmessung dient die Verwendung von zwei oder mehr Messstrecken dazu, Verschmutzungen der Messoptik oder Bauteilschwankungen auszugleichen. Solche Verfahren sind beispielsweise aus DE 42 32 957 C2, DE 41 42 938 C2 und US 5,140, 168 bekannt.

Das in diesen Dokumenten beschriebene Verfahren zur Trübungsmessung funktioniert nach dem Vierstrahl-Wechsellicht-Prinzip. Der dabei verwendete Sensor besitzt zwei einander jeweils gegenüber liegende Emitter und Detektoren. Wenn die Emitter nacheinander betrieben werden, empfangen beide Detektoren jeweils zunächst zwei durch Wechselwirkung mit dem Messmedium gewandelte Lichtsignale des ersten Emitters und danach zwei entsprechende Signale des zweiten Emitters. Die Detektoren wandeln die empfangenen Signale in Detektorsignale um, beispielsweise in eine Photospannung oder einen Photostrom. Aus den Detektorsignalen oder aus daraus abgeleiteten Werten wird ein Trübungswert ermittelt.

Dabei kann ein Detektor entweder ein Lichtsignal empfangen, welches von einem Emitter auf einem direkten Ausbreitungsweg zum Detektor gelangt, und dessen Intensität lediglich durch Lichtverluste durch Streuung geschwächt ist. Ein Detektor kann aber auch auf einem indirekten Ausbreitungsweg ein an dispersen Teilchen des Messmediums gestreutes Lichtsignal eines Emitters empfangen.

Eine Messung der Trübung eines Messmediums nach dem Vierstrahl-Wechsellicht-Verfahren umfasst also eine sequenzielle Anregung der Emitter, eine Erzeugung von Detektorsignalen durch beide Detektoren, und die Ermittlung eines Trübungswerts aus den Detektorsignalen.

Zur Ermittlung des Trübungswerts werden in den in den genannten Dokumenten beschriebenen Verfahren die bei Anregung jeweils eines der Emitter auf direktem Ausbreitungsweg erhaltenen Signale miteinander multipliziert und zu dem Produkt der auf indirektem Ausbreitungsweg erhaltenen Detektorsignale ins Verhältnis gesetzt. Dieses Verhältnis ist ein Maß für die Trübung, also für die Konzentration der dispersen Teilchen. Im konkreten Fall einer Suspension fester Teilchen in einem flüssigen oder gasförmigen Medium wird die Konzentration der dispersen Teilchen auch Feststoffkonzentration genannt. Durch diese Auswertung der Detektorsignale können Bauteilschwankungen oder Störungen durch die Verschmutzung des Sensors bis zu einem gewissen Grade eliminiert werden. Das Vierstrahl-Wechsellicht-Verfahren ist daher bis zu einem gewissen Grade unempfindlich gegenüber solchen Störungen.

Andererseits führt die geringe Sensibilität des mittels des Vierstrahl-Wechsellicht-Verfahrens ermittelten Trübungswerts gegenüber Störungen dazu, dass eine Selbstdiagnose des Trübungssensors auf der Basis dieses Trübungswerts nur zu ungenauen Ergebnissen führt, da sich erst größere Störungen der Bauteile oder starke Verschmutzungen im Trübungswert bemerkbar machen.

Der in DE 41 42 938 C2 beschriebene Sensor für Trübungsmessungen nach dem Vierstrahl-Wechsellicht Verfahren kann deshalb zwischen den Trübungs-Messungen auf Funktion der Lichtsender und der Lichtempfänger überprüft werden. Diese Überprüfung kann jedoch nicht im Messbetrieb des Sensors erfolgen, und somit auch nicht zur unmittelbaren Plausibilitätsprüfung eines ermittelten Trübungswerts herangezogen werden.

Die US 5,416,581 offenbart ein Verfahren zur Messung von Feststoffkonzentrationen in Flüssigkeiten, wobei das auf die Flüssigkeit gerichtete Licht zweier unterschiedlich modulierter Quellen gleichzeitig gemessen und in einem kombinierten Mehrstrahl-Messverfahren aus 90°-Lichtstreuung und einem Rückstreuprozess verarbeitet und daraus die Feststoffkonzentration ermittelt wird.

Die WO 01/63253 offenbart ein optisches Messsystem zur Bestimmung der Konzentration von trüben Flüssigkeitsproben. Das Messsystem besteht aus einem Messvolumen, das die zu messende Probe aufnimmt, einer Vielzahl von Photometerkanälen, die jeweils mit einer Lichtquelle und einem auf einer gemeinsamen optischen Achse angeordneten Lichtdetektor auf verschiedenen Seiten des Messvolumens versehen sind. Die optischen Achsen der Photometerkanäle sind in unterschiedlichen Azimutwinkeln zum Messvolumen angeordnet. Das Messsystem ist mit einer Auswerteeinrichtung ausgestattet, die die Konzentration der zu messenden Flüssigkeitsprobe anhand der Messwerte mehrerer Lichtdetektoren, die verschiedenen Photometerkanälen zugeordnet sind, erfasst.

Es ist daher Aufgabe der Erfindung, die Nachteile der aus dem Stand der Technik bekannten Verfahren zu überwinden. Insbesondere soll ein Verfahren angegeben werden, das eine Selbstdiagnose einer nach dem Vierstrahl-Wechsellicht-Verfahren arbeitenden Vorrichtung zur Trübungsmessung ermöglicht und/oder mit dem Rückschlüsse auf die Plausibilität eines ermittelten Trübungswerts möglich sind.

Diese Aufgabe wird gelöst durch ein Verfahren nach Anspruch 1 bzw. eine Vorrichtung nach Anspruch 8.

Insbesondere sind der erste, der zweite und der weitere Ausbreitungsweg jeweils unterschiedliche Ausbreitungswege.

Unter der Überprüfung der Plausibilität eines Trübungswerts wird insbesondere die Ermittlung einer Wahrscheinlichkeit verstanden, mit der der fragliche Trübungswert die tatsächliche Trübung des Messmediums wiedergibt.

Aus den unmittelbaren Detektorsignalen können zur Ermittlung des Trübungswerts auch zunächst aus den Detektorsignalen abgeleitete Werte gebildet werden. Ein aus einem unmittelbaren Detektorsignal abgeleiteter Wert zur Bestimmung eines Trübungswertes kann zum Beispiel ein über einen Analog/Digital-Wandler digitalisiertes Detektorsignal oder ein aus dem unmittelbaren Detektorsignal oder einem digitalisierten Detektorsignal berechneter Intensitätswert sein. Ist das unmittelbare Detektorsignal ein Photostrom oder eine Photospannung können diese vor der Digitalisierung in eine korrespondierende Spannung oder einen korrespondierenden Strom umgewandelt werden. Grundsätzlich sind auch weitere abgeleitete und/oder aus den Detektorsignalen umgerechnete Werte denkbar. Zur Ermittlung eines Trübungswerts können daher grundsätzlich auch aus den unmittelbaren Detektorsignalen abgeleitete Werte verwendet werden. Hier und im Folgenden werden unter dem Begriff "Detektorsignal" daher, wo nicht ausdrücklich anders definiert, auch neben dem unmittelbaren Detektorsignal auch aus einem unmittelbaren Detektorsignal abgeleitete Werte verstanden.

In einer Weiterbildung des Verfahrens wird der Trübungswert aus den Detektorsignalen des ersten und zweiten Detektors nach der Formel

$$W_1 = \frac{I_{1\_1} \cdot I_{2\_2}}{I_{1\_2} \cdot I_{2\_1}} \tag{1}$$

ermittelt,

wobei $I_{1\_1}$ das Detektorsignal des ersten Detektors bei Anregung des ersten Emitters ist,
wobei $I_{1\_2}$ das Detektorsignal des ersten Detektors bei Anregung des zweiten Emitters ist,
wobei $I_{2\_1}$ das Detektorsignal des zweiten Detektors bei Anregung des ersten Emitters ist, und
wobei $I_{2\_2}$ das Detektorsignal des zweiten Detektors bei Anregung des zweiten Emitters ist.

Insbesondere unterscheiden sich der erste, zweite, dritte und vierte Ausbreitungsweg voneinander.

In einer Weiterbildung dieser Ausgestaltung wird der zusätzliche Trübungswert nach der Formel

$$W_1 = \frac{I_{3\_1} \cdot I_{4\_2}}{I_{3\_2} \cdot I_{4\_1}} \tag{2}$$

ermittelt,

wobei $I_{3\_1}$ das Detektorsignal des dritten Detektors bei Anregung des ersten Emitters ist,

wobei $I_{4\_2}$ das Detektorsignal des vierten Detektors bei Anregung des zweiten Emitters ist,

wobei $I_{3\_2}$ das Detektorsignal des dritten Detektors bei Anregung des zweiten Emitters ist,

wobei $I_{4\_1}$ das Detektorsignal des vierten Detektors bei Anregung des ersten Emitters ist.

Somit wird also neben dem ersten nach dem Vierstrahl-Wechsellicht-Verfahren bestimmten Trübungswert ein weiterer Trübungswert nach dem Vierstrahl-Wechselicht-Verfahren ermittelt, der zu Vergleichszwecken, insbesondere zur Prüfung der Plausibilität des ersten Trübungswerts, dienen kann.

In einer vorteilhaften Weiterbildung sind der dritte und vierte Detektor derart angeordnet, dass sie im Messmedium in einem anderen Winkel gestreutes Licht empfangen als der erste und der zweite Detektor. Auf diese Weise reagieren die beiden Trübungswerte in unterschiedlicher Weise auf Störungen, beispielsweise auf Störungen, die durch ein temporär am Sensor auftretendes großes Partikel verursacht sind.

Die Trübungswerte werden miteinander verglichen indem die den Trübungswerten entsprechenden Feststoff-Konzentrationen ermittelt, und die Differenz zwischen der ersten und der zweiten Feststoffkonzentration gebildet wird. Zur Prüfung der Plausibilität der Trübungswerte wird die Differenz mit einem vorgegebenen Schwellenwert verglichen. Die Feststoff-Konzentrationen werden anhand von Kalibrationsdaten ermittelt.

Dabei wird der Schwellenwert so vorgegeben, dass ein Überschreiten des Schwellenwerts eine nicht akzeptable Abweichung der aus den Trübungswerten erhaltenen Feststoff-Konzentrationen voneinander darstellt.

In einer vorteilhaften Weiterbildung wird eine Fehlermeldung ausgegeben, wenn die Differenz der Feststoff-Konzentrationen den vorgegebenen Schwellenwert überschreitet.

Alternativ oder zusätzlich kann die Trübungsmessung wiederholt werden, wenn die Differenz den vorgegebenen Schwellenwert überschreitet.

In einer weiteren Ausgestaltung des Verfahrens wird mindestens eines der Detektorsignale mit einem Sollwert verglichen. Durch die Auswertung mindestens eines oder mehrerer einzelner Detektorsignale durch Vergleichen mit einem Sollwert können gezielt Störungen festgestellt werden, die in den einzelnen Ausbreitungswegen des Lichtsignals auftreten.

In einer Weiterbildung wird aus allen zur Ermittlung eines Trübungswertes verwendeten Detektorsignalen und den Signalen der zusätzlichen Detektoren eine Anzahl von n Detektorsignalen ausgewählt und die ausgewählten Detektorsignale als Koordinaten eines Messwert-Punkts in einem n-dimensionalen Koordinatensystem oder als Komponenten eines Messwert-Vektors in einem n-dimensionalen Vektorraum dargestellt.

In einer Weiterbildung wird ein Abstand des Messwert-Punktes oder des Messwert-Vektors zu einem vorgegebenen n-dimensionalen Bereich des Punktraums oder der Vektorraums bestimmt. Ist der vorgegebene n-dimensionale Bereich ein Bereich, welcher vorzugsweise plausible Messwert-Punkte oder -Vektoren umfasst, d.h. Punkte oder Vektoren, die Messwerte repräsentieren, die von keiner oder zumindest einer hinsichtlich der Messgenauigkeit noch tolerablen Störung beeinträchtigt sind, können zu starke Abweichungen des Messwert-Punkts bzw. des Messwert-Vektors oder einzelner Koordinaten bzw. Komponenten festgestellt werden. Solche zu starken Abweichungen lassen auf Störungen der Messung schließen, welche in einzelnen Ausbreitungswegen wirksam werden. Ergibt die Abstandsbestimmung, dass der Messwert-Punkt oder Messwert-Vektor innerhalb des vorgegebenen n-dimensionalen Bereichs liegt, kann der Messwert als plausibel eingestuft werden.

In einer Weiterbildung wird der n-dimensionale Bereich aus einem Modell ermittelt oder anhand eines maschinellen Lernverfahrens erlernt.

In einer weiteren Ausgestaltung wird der neu ermittelte Messwert-Punkt oder Messwert-Vektor zur Anpassung des vorgegebenen n-dimensionalen Bereichs verwendet, insbesondere wenn der n-dimensionale Bereich mittels eines maschinellen Lernverfahrens erlernt wird. Aus sich bei Aufnahme des neuen Messwert-Vektors ergebenden Veränderungen des n-dimensionalen Bereichs, wie Verzerrungen oder Verschiebungen, können Rückschlüsse auf eine neu auftretende Störung sowie auf die Art dieser Störung gezogen werden.

In einer weiteren Ausgestaltung kann anhand des Abstands des Messwert-Punktes oder des Messwert-Vektors vom vorgegebenen n-dimensionalen Bereich eine, insbesondere maschinelle, Plausibilitätsprüfung des aus den Detektorsignalen ermittelten Trübungswertes durchgeführt werden. Dies kann beispielsweise durch die elektronische Auswertungseinheit erfolgen.

Die Aufgabe wird weiterhin gelöst durch eine Vorrichtung zur Messung der Trübung eines Messmediums nach Anspruch 8.

Insbesondere unterscheiden sich der erste und zweite und der weitere Ausbreitungsweg (siehe Anspruch 8) voneinander.

In einer Ausgestaltung ist der dritte bzw. vierte Detektor so bezüglich der Emitter angeordnet, dass er ein durch das Messmedium gewandeltes Lichtsignal mindestens eines Emitters empfängt.

In einer alternativen Ausgestaltung ist der dritte bzw. vierte Detektor so bezüglich der Emitter angeordnet, dass er ein Lichtsignal mindestens eines Emitters auf einem Ausbreitungsweg außerhalb des Messmediums empfängt.

In einer weiteren Ausgestaltung sind der erste Emitter und der erste Detektor nebeneinander angeordnet und der zweite Emitter und der zweite Detektor sind spiegelbildlich zu dem ersten Emitter und dem ersten Detektor angeordnet. Auf diese Weise empfangen beide Detektoren ein im Messmedium im gleichen Winkel gestreutes Lichtsignal.

In einer Weiterbildung dieser Ausgestaltung sind zusätzlich der dritte und der vierte Detektor derart angeordnet, dass der zweite Emitter, der zweite Detektor und der vierte Detektor spiegelbildlich zu dem ersten Emitter, dem ersten Detektor und dem dritten Detektor angeordnet sind. Die Vorrichtung erlaubt die Ermittlung von zwei Trübungswerten nach dem Vierstrahl-Wechsellicht-Verfahren. Indem der dritte und vierte Detektor im Messmedium in einem anderen Winkel gestreutes Licht empfangen als der erste und zweite Detektor, werden zwei unterschiedliche Trübungswerte erhalten, denen unterschiedliche Kalibriermodelle zugrunde gelegt werden. Die unterschiedlichen Trübungswerte sind somit unabhängig voneinander. Störungen, die sich nur in einem der beiden Trübungswerte bemerkbar machen, können so erfasst werden.

Die spiegelbildlich angeordneten Emitter und Detektoren sind vorteilhafter Weise alle spiegelsymmetrisch gegenüber derselben Spiegelsymmetrieebene angeordnet. Diese kann beispielsweise bei einer Vorrichtung zur Trübungsmessung mit kreisförmigem Querschnitt entlang eines Kreisdurchmessers des Querschnitts verlaufen.

In einer vorteilhaften Weiterbildung dieser Ausführung ist daher der erste Emitter dazu ausgelegt, im angeregten Zustand einen Lichtstrahl, insbesondere ein Lichtstrahlbündel mit einer Hauptstrahlrichtung in das Messmedium zu richten, wobei die Normale einer Stirnseite des ersten Detektors in einem ersten Winkel zur Hauptstrahlrichtung angeordnet ist, und wobei die Normale einer Stirnseite des dritten Detektors in einem zweiten Winkel zur Hauptstrahlrichtung angeordnet ist, und wobei der erste Winkel sich vom zweiten Winkel unterscheidet.

Auch bezüglich der Ausrichtung der Stirnseiten der Detektoren zur Hauptstrahlrichtung der von den eingeschalteten Emittern ausgesendeten Strahlenbündel sind der erste und der dritte Detektor vorteilhafterweise gegenüber dem zweiten und vierten Detektor spiegelsymmetrisch bezüglich einer Spiegelebene angeordnet, welche durch einen Kreisdurchmesser des kreisförmigen Querschnitts der Vorrichtung zur Trübungsmessung und eine Parallele zur Hauptstrahlrichtung des Emittersignals aufgespannt wird.

In einer weiteren Ausführung sind die Emitter Leuchtdioden und die Detektoren Photodioden.

In einer vorteilhaften Ausbildung umfasst die Auswertungseinheit einen Lernspeicher, insbesondere ein neuronales Netz. Ein solcher Lernspeicher kann dazu ausgelegt sein, die Detektorsignale der einzelnen Detektoren zu speichern und einen Signalbereich zu erlernen, in welchem plausible Messwerte auftreten können. Er kann weiterhin dazu ausgelegt sein, neu erfasste Detektorsignale mit dem erlernten Signalbereich zu vergleichen und anhand dieses Vergleichs festzustellen, ob während der Trübungsmessung Störungen aufgetreten sind. Insbesondere kann der Lernspeicher anhand der Abweichung jedes einzelnen Detektorsignals von dem erlernten Signalbereich auf das Vorliegen einer bestimmten Art von Störung, z.B. einer Verschmutzung des Sensors oder einer Schwankung eines einzelnen Bauteils schließen.

Im Folgenden wird die Erfindung anhand der Zeichnung erläutert. Es zeigen

Fig. 1    ein Schnitt durch eine Vorrichtung zur Trübungsmessung;

Fig. 2    die Vorrichtung aus Fig. 1 in Aufsicht;

Fig. 3    die Ausbreitungswege der von den Emittern ausgesendeten Lichtsignale beim Vierstrahl-Wechsellicht-Verfahren;

Fig. 4    drei Kalibrationskurven für die Kalibrierung der Vorrichtung aus Fig. 1 in verschiedenen Messmedien;

Fig. 5    Detektorsignale einer Trübungsmessung nach dem Vierstrahl-Wechsellicht-Verfahren als Funktion des Feststoffgehalts;

Fig. 6    den aus den in Fig. 4 gezeigten Detektorsignalen ermittelten Trübungswert;

Fig. 7    eine Darstellung von aus drei Detektorsignalen als Koordinaten gebildeten Messpunkten in einem dreidimensionalen Koordinatensystem.

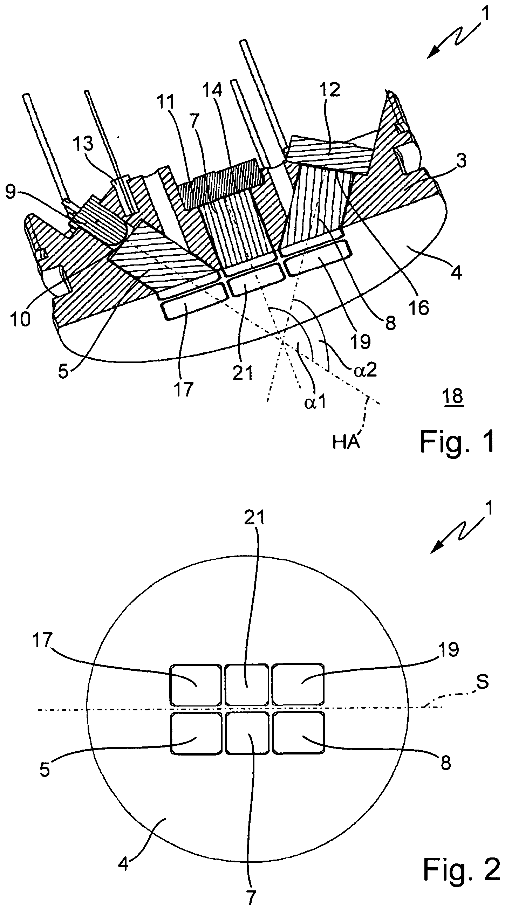

In Fig. 1 und Fig. 2 ist eine Vorrichtung 1 zur Trübungsmessung mit zwei Emittern und vier Detektoren in einer Schnittzeichnung (Fig. 1) und in Aufsicht (Fig. 2) schematisch dargestellt. Der zylindrische Grundkörper 3 weist eine in einem spitzen Winkel zu einer Grundfläche 4 des zylindrischen Grundkörpers 3 orientierte Bohrung 5 auf. Innerhalb dieser Bohrung 5 ist eine erste Leuchtdiode 9 als erster Emitter angeordnet, deren Stirnseite 10 so ausgerichtet ist, dass der zentrale Hauptstrahl HA eines von der Leuchtdiode 9 emittierten Strahlenbündels im Messmedium 18 in einem Winkel von 45° zur Grundfläche 4 des zylindrischen Grundkörpers 3 verläuft. Dabei wird die Brechung des Lichtstrahls an der Grenzfläche zum Messmedium 18 und an einem gegebenenfalls zwischen Messmedium 18 und Leuchtdiode 9 angeordneten Fensters (nicht gezeigt) mit berücksichtigt. Um der einfacheren Darstellung willen ist die Brechung des Hauptstrahls HA in der Figur nicht dargestellt.

Eine weitere Bohrung 7 senkrecht zur Grundfläche 4 dient als Aufnahme für eine erste Photodiode 11 als erster Detektor. Die Stirnseite 14 der Photodiode 11 ist derart angeordnet, dass sie in einem Winkel $\alpha 1$ von 135° zur Hauptstrahlrichtung HA der Leuchtdiode 9 im Messmedium 18 gestreutes Licht empfangen kann. Auch hier wird die Lichtbrechung an einer Grenzfläche zum Messmedium 18 und an einem gegebenenfalls zwischen Messmedium 18 und Leuchtdiode 9 angeordneten Fensters mit berücksichtigt.

Eine dritte Bohrung 8 bildet eine weitere Aufnahme für eine zweite Photodiode 12 als weiterer Detektor. Die Photodiode 12 ist so angeordnet, dass die Normale ihrer Stirnseite 16 in einem spitzen Winkel zur Grundfläche 4 steht. Die zweite Photodiode 12 ist insbesondere derart angeordnet, dass sie in einem Winkel $\alpha2$ von 90° zur Hauptstrahlrichtung HA der Leuchtdiode 9 im Messmedium 18 gestreutes Licht empfangen kann. Auch hier wird die Lichtbrechung an der Grenzfläche zum Messmedium 18 und an einem gegebenenfalls zwischen Messmedium 18 und Leuchtdiode 9 angeordneten Fensters mit berücksichtigt.

Im Grundkörper 3 ist weiterhin eine Monitordiode 13 untergebracht, welche über eine weitere Bohrung (nicht gezeigt) im zylindrischen Grundkörper 3 auf direktem Wege Licht der Leuchtdiode 9 empfangen kann. Der Ausbreitungsweg dieses Lichtsignals ist so gewählt, dass das Licht nicht mit einem Messmedium 18, in das der Grundkörper zur Trübungsmessung eingetaucht wird, wechselwirkt. Bei der Monitordiode 13 handelt es sich um eine Photodiode.

Eine zweite Leuchtdiode und eine dritte und vierte Photodiode sind in einer weiteren Aufnahme 17 für die Leuchtdiode und in zwei weiteren Aufnahmen 19, 21 für die Photodioden im Grundkörper 3 spiegelbildlich bezüglich der senkrecht zur Grundfläche 4 entlang eines Durchmessers der kreisförmigen Grundfläche 4 verlaufenden Spiegelsymmetrieebene S, zur ersten Leuchtdiode 9 in der Aufnahme 5 sowie zu den Photodioden 11 und 12 in den Aufnahmen 7 und 8 angeordnet. Insbesondere verläuft die Spiegelsymmetrieebene S parallel zur Hauptstrahlrichtung HA der ersten Leuchtdiode 9 und der, nicht eingezeichneten, in der Bohrung 17 angeordneten Leuchtdiode.

Der zweiten Leuchtdiode kann auf die gleiche Weise wie der ersten Leuchtdiode 9 eine weitere Monitordiode zugeordnet sein, die hier nicht dargestellt ist. Alternativ kann auch ein und dieselbe Monitordiode beiden Leuchtdioden zugeordnet sein. Beim Vierstrahl-Wechsellicht-Verfahren werden beide Leuchtdioden abwechselnd betrieben, so dass eine einzige Monitordiode zur Überwachung beider Leuchtdioden ausreicht.

Da die Monitordiode bzw. die Monitordioden jeweils ein direktes, von dem Messmedium 18 unbeeinflusstes Lichtsignal der Leuchtdioden empfangen, können sie insbesondere zur Überwachung der Photodioden genutzt werden. Eine Abnahme der Signalintensität aufgrund von Alterungserscheinungen schlägt sich im Detektorsignal der Monitordiode bzw. -dioden nieder und kann von einer elektronischen Auswertungseinheit festgestellt werden. Die elektronische Auswertungseinheit kann in diesem Fall die Ausgabe eines Alarmsignals veranlassen.

Mit der Vorrichtung zur Trübungsmessung nach Fig. 1 und Fig. 2 sind zwei Emitter/Detektor-Anordnungen für Trübungsmessungen nach dem Vierstrahl-Wechsellichtverfahren realisiert, so genannte "Kanäle".

Den ersten Kanal bildet die im Folgenden als 135°-Kanal bezeichnete Anordnung umfassend die beiden in den Aufnahmen 5 und 17 angeordneten Leuchtdioden und die in den Aufnahmen 7 und 21 angeordneten erste und zweite Photodiode. Dabei entsprechen die Leuchtdioden dem ersten und zweiten Emitter und die Photodioden dem ersten und zweiten Emitter der eingangs beschriebenen Anordnung zur Durchführung des Vierstrahl-Wechsellicht-Verfahrens. Der zweite Kanal wird im Folgenden als 90°-Kanal bezeichnet und umfasst die beiden Leuchtdioden sowie die in den Aufnahmen 8 und 19 angeordnete dritte und vierte Photodiode in entsprechender Weise.

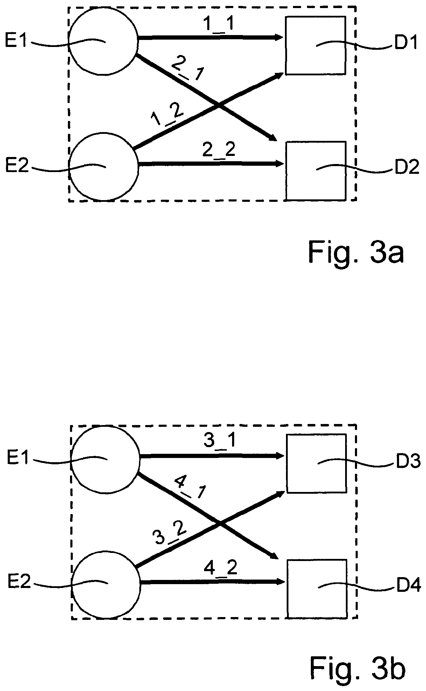

Zur Ermittlung des Trübungswertes werden die Emitter abwechselnd zur Emission von Licht angeregt. Dabei können gleichzeitig die Detektorsignale der Detektoren beider Kanäle erfasst werden. Die Lichtwege für den 135°-Kanal und den 90°-Kanal sind in Fig. 3 schematisch und der besseren Übersichtlichkeit halber getrennt dargestellt. Die beiden Emitter, entsprechend der Leuchtdiode 9 und der in der Bohrung 17 angeordneten Leuchtdiode in der Vorrichtung nach Fig. 1 und Fig. 2, sind hier mit E1 und E2 bezeichnet. Die Detektoren des 135°-Kanals, welche der Photodiode 11 und der in der Bohrung 21 untergebrachten spiegelsymmetrisch zur Photodiode 11 angeordneten Photodiode entsprechen, werden mit D1 und D2 bezeichnet. Die Detektoren des 90°-Kanals, welche der Photodiode 12 und der in der Bohrung 19 untergebrachten spiegelsymmetrisch zur Photodiode 12 angeordneten Photodiode entsprechen, werden mit D3 und D4 bezeichnet.

Wird der erste Emitter E1 zur Lichtemission angeregt, so empfangen der erste Detektor D1 des 135°-Kanals auf dem Ausbreitungsweg 1_1 und der zweite Detektor D2 des 135°-Kanals auf dem Ausbreitungsweg 2_1 ein Lichtsignal. Gleichzeitig empfangen die Detektoren des 90°-Kanals Lichtsignale, nämlich der dritte Detektor D3 auf dem Ausbreitungsweg 3_1 und der vierte Detektor D4 auf dem Ausbreitungsweg 4_1.

Wird der zweite Emitter zur Lichtemission angeregt, empfangen der erste Detektor des 135°-Kanals Licht ein Lichtsignal auf dem Ausbreitungsweg 1_2 und der zweite Detektor des 135°-Kanals auf dem Ausbreitungsweg 2_2. Gleichzeitig empfängt der dritte Detektor D3 ein Lichtsignal des Emitters E2 auf dem Ausbreitungsweg 3_2 und der vierte Detektor D4 auf dem Ausbreitungsweg 4_2.

Alle Ausbreitungswege sind in diesem Fall indirekte Ausbreitungswege, bei denen die Detektoren ein an dispersen Teilchen des Messmediums gestreute Lichtsignale des jeweils aktivierten Emitters empfangen.

Als Detektoren verwendete Photodioden erzeugen aus den empfangenen Lichtsignalen eine Photospannung oder einen Photostrom. Die Photospannung bzw. der Photostrom werden zur Ermittlung eines Trübungswerts weiterverarbeitet. Wie eingangs ausgeführt, können aus der Photospannung bzw. dem Photostrom Werte abgeleitet werden, beispielsweise digitalisierte Werte, die dann zur Ermittlung eines Trübungswertes verwendet werden. Die Photospannung bzw. der Photostrom als unmittelbare Detektorsignale sowie daraus abgeleitete Werte werden, wie bereits eingangs definiert, unter dem Begriff "Detektorsignal" zusammengefasst.

Aus den Detektorsignalen der Detektoren D1 und D2 lässt sich nach der Formel

$$W_1 = \frac{I_{1\_1} \cdot I_{2\_2}}{I_{1\_2} \cdot I_{2\_1}} \qquad (1)$$

ein erster Trübungswert für den 135°-Kanal ermitteln. Dabei ist $I_{1\_1}$ das Detektorsignal des ersten Detektors bei Anregung des ersten Emitters, $I_{1\_2}$ das Detektorsignal des ersten Detektors bei Anregung des zweiten Emitters, $I_{2\_1}$ das Detektorsignal des zweiten Detektors bei Anregung des ersten Emitters, und $I_{2\_2}$ das Detektorsignal des zweiten Detektors bei Anregung des zweiten Emitters.

In analoger Weise lässt sich aus den Detektorsignalen der Detektoren D3 und D4 für den 90°-Kanal ein Vierstrahl-Wechsellicht Trübungswert nach der Formel

$$W_1 = \frac{I_{3\_1} \cdot I_{4\_2}}{I_{3\_2} \cdot I_{4\_1}} \qquad (2)$$

ermitteln, wobei $I_{3\_1}$ das Detektorsignal des dritten Detektors bei Anregung des ersten Emitters, $I_{4\_2}$ das Detektorsignal des vierten Detektors bei Anregung des zweiten Emitters, $I_{3\_2}$ das Detektorsignal des dritten Detektors bei Anregung des zweiten Emitters, und $I_{4\_1}$ das Detektorsignal des vierten Detektors bei Anregung des ersten Emitters ist.

Der Trübungswert hängt neben der Feststoff-Konzentration im Messmedium auch von der Größe der dispersen Teilchen und vom Winkel, in dem das Streulicht erfasst wird, ab. Daher muss die beschriebene Vorrichtung zur Trübungsmessung nicht nur jeweils für den 135°-Kanal und den 90°-Kanal einzeln kalibriert werden, sondern auch jeweils bezüglich des zu untersuchenden Messmediums.

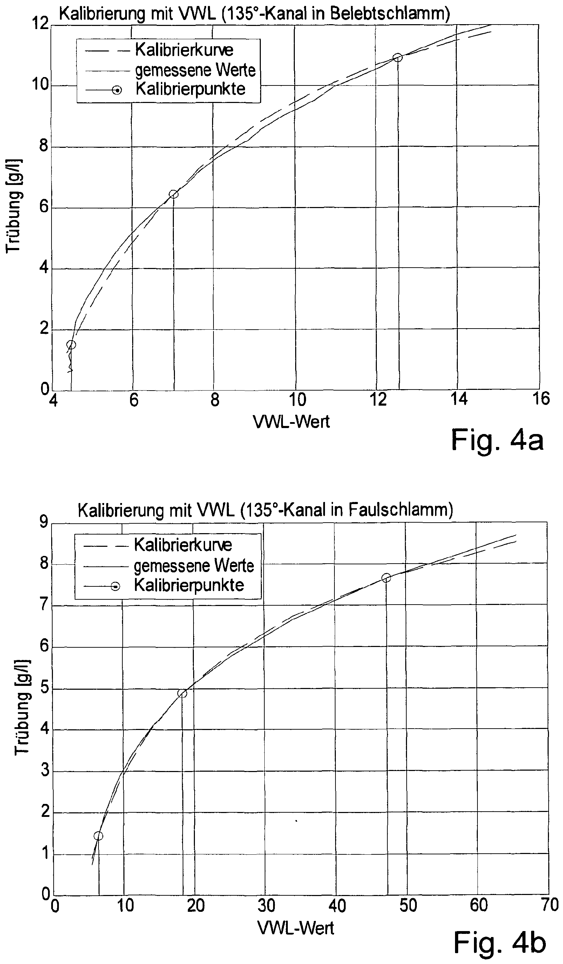

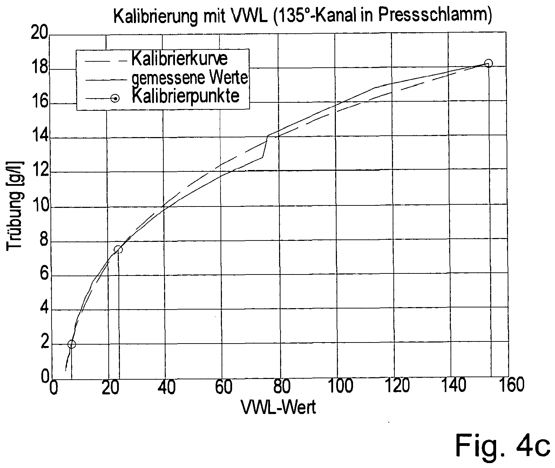

In Fig. 4 sind exemplarische Kalibrierkurven für den 135°-Kanal, also unter Auswertung der Detektorsignale des ersten und zweiten Detektors, in drei verschiedenen Messmedien, nämlich in Belebtschlamm (Fig. 4a), in Faulschlamm (Fig. 4b) und in Pressschlamm (Fig. 4c) dargestellt. Die Kalibrierkurven sind in Diagrammen dargestellt, bei denen auf der Abszisse der nach Formel (1) berechnete Trübungswert (VWL-Wert) und auf der Ordinate die Feststoffkonzentration in g/l aufgetragen ist.

Dabei werden im vorliegenden Beispiel drei Punkte, welche durch Kreise markiert sind, für die Kalibrierung genutzt. Die durchgezogene Kurve zeigt die im Kalibriermedium gemessenen Werte. Die aus den drei Kalibrierpunkten ermittelte Kalibrierkurve ist gestrichelt dargestellt. Im vorliegenden Fall ergibt sich die beste Näherung an die Messkurve durch Logarithmierung der Messwerte und anschließendes Anpassen eines Polynoms dritten Grades.

In analoger Weise wird der 90°-Kanal kalibriert. Dabei ergeben sich aufgrund des anderen Streuwinkels andere Kalibrierkurven als für den 135°-Kanal. Das bedeutet, dass die Kalibrierkurven für den 90°-Kanal von den Kalibrierparametern des 135°-Kanals unabhängig sind.

Zur Ermittlung der Trübung eines Messmediums können aus den Detektorsignalen der vier Detektoren D1 bis D4 somit zwei unterschiedliche Trübungswerte nach dem Vierstrahl-Wechsellicht-Verfahren ermittelt werden. Die zugehörigen Trübungswerte oder Feststoff-Konzentrationen werden nach den beschriebenen voneinander unabhängigen Kalibrierkurven ermittelt. Diese Auswertung kann mittels einer elektronischen Auswertungseinheit erfolgen.

Solange mittels beider Kanäle im Wesentlichen identische Feststoff-Konzentrationen ermittelt werden, können diese Werte als plausibel angenommen werden. Die Feststoff-Konzentrationen können dann gemittelt oder nur einer oder beide als Messergebnis ausgegeben werden.

Schwankt jedoch ein Trübungswert bzw. eine Feststoff-Konzentration beispielsweise kurzzeitig stark, ist eine Messwertplausibilität nicht mehr gegeben. Dies kann beispielsweise der Fall sein, wenn innerhalb eines Ausbreitungswegs der Vierstrahl-Wechsellicht-Anordnung ein großes Partikel auftritt. In diesem Fall ergibt sich eine stärkere Abweichung anhand beider Kanäle ermittelten Feststoff-Konzentrationen voneinander. Wird eine derartige Abweichung erkannt, beispielsweise durch Bildung der Differenz der beiden Feststoff-Konzentrationen und Vergleich mit einem vorgegebenen Schwellenwert für diese Differenz, kann ein Alarmsignal von der Auswertungseinheit ausgegeben werden. Die Messung wird dann nach kurzer Zeit wiederholt und die Differenz der neu ermittelten Trübungswerte erneut mit dem Schwellenwert verglichen. Unterschreitet die Differenz den Schwellenwert, wird ein Messergebnis ausgegeben, beispielsweise ein Mittelwert der aus beiden Kanälen ermittelten Feststoff-Konzentrationen.

Ein weiteres mögliches Szenario ist, dass die beiden aus den unterschiedlichen Kanälen ermittelten Feststoff-Konzentrationen über längere Zeit um einen im Wesentlichen konstanten, nicht vernachlässigbaren Betrag voneinander abweichen. Wird ein solches Verhalten festgestellt, ist die Wahrscheinlichkeit sehr groß, dass die Kanäle ungleichmäßig verschmutzt sind. In diesem Fall kann von der Auswertungseinheit ein Alarm ausgegeben werden, der anzeigt, dass eine Reinigung des Sensors erforderlich ist. Alternativ oder zusätzlich kann von der Auswertungseinheit automatisch eine Reinigung in die Wege geleitet werden. Mittel zur automatischen Reinigung eines Trübungssensors sind dem Fachmann beispielsweise aus DE 41 42 938 C2 bekannt.

Andere Effekte wie die Bauteilalterung oder eine im Wesentlichen gleichmäßige Verschmutzung der gesamten Anordnung können durch zusätzliche Überwachung der einzelnen Detektorsignale erfasst werden.

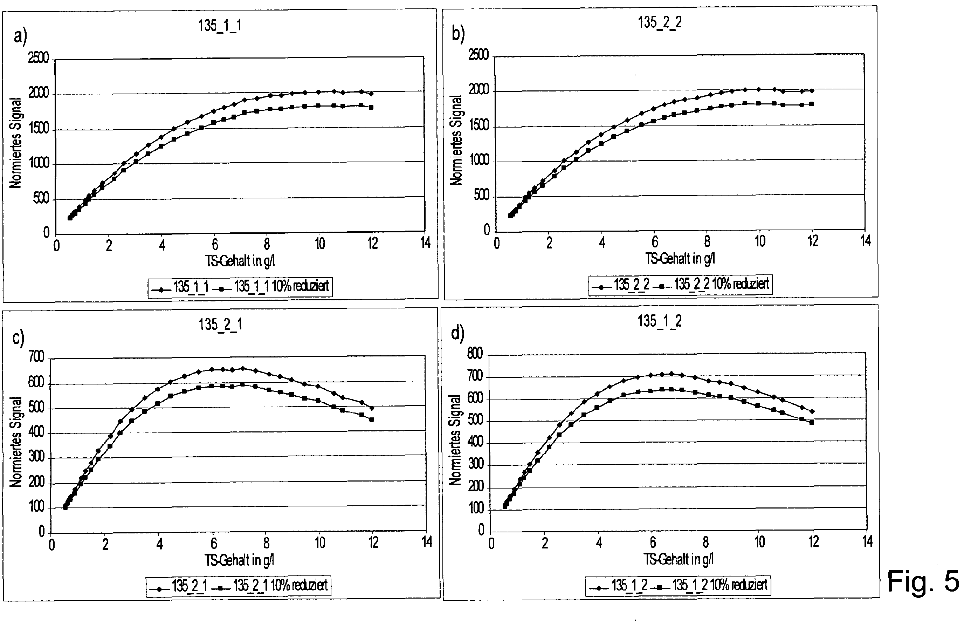

In Fig. 5 sind beispielhaft die vier Detektorsignale des 135°-Kanals, die den in Fig. 3 a) dargestellten vier Ausbreitungswegen entsprechen, bei einem Feststoffgehalt bis zu 12 g/l (Belebtschlamm) gezeigt. Auf der Abszisse ist der Feststoffgehalt (TS-Gehalt) in g/l angegeben, auf der Ordinate eine normierte Signalintensität des Detektorsignals. Fig. 5 a) zeigt das dem Ausbreitungsweg 1_1 entsprechende Detektorsignal des Detektors D1, Fig. 5 b) das dem Ausbreitungsweg 2_2 entsprechende Detektorsignal des Detektors D2, Fig. 5 c) das dem Ausbreitungsweg 2_1 entsprechende Detektorsignal des Detektors D2 und Fig. 5 d) das dem Ausbreitungsweg 1_2 entsprechende Detektorsignal des Detektors D1. Die rautenförmigen Punkte zeigen dabei jeweils den Verlauf des Detektorsignals bei einer Emitterleistung von 100 % und einer optimalen Signalausbeute der Detektoren. Die quadratischen Punkte zeigen die vier Detektorsignale im gleichen Messmedium bei gleichem Feststoffgehalt und bei einer gleichmäßigen Verringerung der Signalstärke, hier um 10 %. Eine solche gleichmäßige Verringerung des beim Detektor auftreffenden Signals kann beispielsweise durch gleichmäßige Verschmutzung des Sensors auftreten.

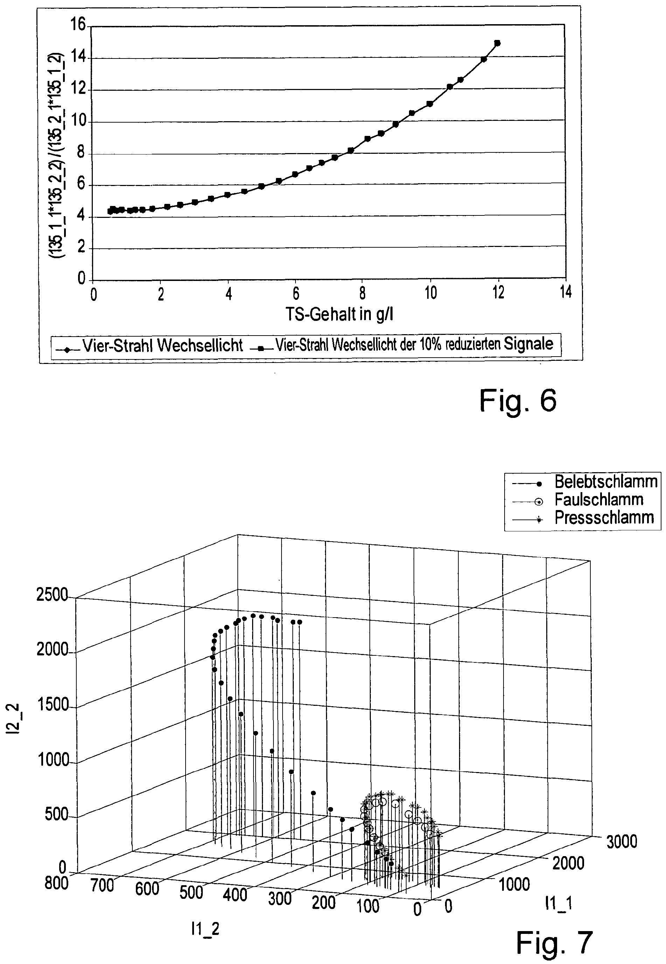

In Fig. 6 ist der aus den in Fig. 5 gezeigten Einzel-Detektorsignalen nach der Formel (1) ermittelte Trübungswert als Funktion der zugehörigen Feststoffkonzentration (TS-Gehalt) in g/l aufgetragen. Wieder repräsentieren die rautenförmigen Punkte die bei 100%iger Signalausbeute erhaltenen Trübungswerte, die quadratischen Punkte repräsentieren Trübungswerte, die aus den um 10% geschwächten Einzel-Detektorsignalen ermittelt wurden. Obwohl die Einzel-Signale bei einer Emitterleistung von 100% und einer um 10% verringerten Signalstärke einen deutlich unterschiedlichen Verlauf zeigen, ist dieser Unterschied im nach dem Vierstrahl-Wechsellicht-Verfahren unter Verwendung der Formel (1) ermittelten Trübungswert nicht zu entnehmen. Dies liegt an der bereits eingangs beschriebenen relativen Robustheit des Vierstrahl-Wechsellicht-Verfahrens gegenüber geringfügigen Störungen.

Zur Überwachung einer gleichmäßigen Störung des Sensors, beispielsweise durch Bauteilalterung oder aufgrund gleichmäßiger Verschmutzung kann daher die Überwachung der einzelnen Detektorsignale wertvolle Zusatzinformationen bereitstellen, und so eine Störung frühzeitig erkannt und beseitigt werden, bzw. eine Abschätzung für die weitere Lebensdauer eines Bauteils durchgeführt werden.

Hierzu wird eine Anzahl n der ermittelten Detektor-Einzelsignale, im Beispiel der Vorrichtung nach Fig. 1 und 2 sind dies maximal 8 Signale, ausgewählt. Die Anzahl n ist dabei kleiner oder gleich der Anzahl aller erfassten Detektorsignale. Aus diesen Detektorsignalen wird ein Messwertvektor oder ein Messwertpunkt gebildet, dessen Komponenten die n Detektor-Einzelsignale bilden. Der Messwertvektor wird in einem n-dimensionalen Vektorraum dargestellt, der Messwertpunkt entsprechend in einem n-dimensionalen Koordinatensystem gebildet. Beide Darstellungen sind äquivalent.

Ein Beispiel ist in Fig. 7 gezeigt. Hier sind in einem dreidimensionalen Koordinatensystem drei von insgesamt vier einzelnen Detektorsignalen des 135°-Kanals bei Messungen in unterschiedlichen Messmedien gezeigt. Die drei gezeigten Detektorsignale entsprechen den Ausbreitungswegen 1_1, 1_2 und 2_2 des in Fig. 3 a) gezeigten Schemas. Die Messmedien sind Belebtschlamm (Punkte), Faulschlamm (Kreise) und Pressschlamm (Sterne). Die einzelnen Messwert-Punkte entsprechen unterschiedlichen Feststoff-Konzentrationen.

Man erkennt, dass alle so gewonnenen Messwert-Punkte auf einer Ebene liegen, obwohl in sehr unterschiedlichen Medien gemessen wurde.

Im allgemeinen Fall wird unter Verwendung der Detektorsignale aller Detektoren, der Monitordiode und des aus den Einzelkanälen nach dem Vierstrahl-Wechsellicht-Verfahren ermittelten Trübungswerts eine Fläche bzw. ein n-dimensionaler Bereich innerhalb des n-dimensionalen Vektorraums modelliert oder mit Methoden des maschinellen Lernens erlernt. Im Beispiel der Fig. 7 ist dieser n-dimensionale Bereich also eine Ebene, auf der alle Messwertpunkte liegen.

Ein neuer Messwert-Vektor oder -Punkt kann dann diagnostisch bewertet werden, indem ein Abstand des Vektors oder Punktes zum geschätzten oder erlernten Bereich, im Beispiel der Fig. 7 zur ermittelten Ebene, ist. Durch ein solches Verfahren können sowohl Messwert-Ausreißer detektiert, als auch beispielsweise das Maß der Verschmutzung einzelner Kanäle ermittelt werden. Insbesondere kann aus der Abstandsbestimmung anhand der erlernten Daten eine Wahrscheinlichkeit ermittelt werden, mit der der neue Messwert-Vektor, und somit der zuletzt ermittelte Trübungswert die tatsächliche Trübung des Messmediums wiedergibt. Dies kann zur Plausibilitätsprüfung des Messwerts herangezogen werden.

Durch eine kontinuierliche Speicherung der neu ermittelten Messwert-Vektoren in einem Lernspeicher, insbesondere in einem neuronalen Netz, kann das n-dimensionale Volumen immer weiter modifiziert werden. Bei kontinuierlicher Störung des Systems, z.B. durch gleichmäßige Verschmutzung aller einzelnen Ausbreitungswege bleibt die Form des n-dimensionalen Volumens im Wesentlichen erhalten, wird aber innerhalb des n-dimensionalen Raumes verschoben.

Bei Alterung eines Bauteils, z.B. einer Leuchtdiode, kommt es sowohl zu einer Verschiebung als auch zu einer Stauchung oder Streckung des n-dimensionalen Volumens. Die Art der Verzerrung des n-dimensionalen Volumens kann durch eine Lernmethode oder durch ein Modell derart bewertet werden, dass direkt aus der Verzerrung auf die Art der Störung geschlossen werden kann und ggfs. automatisch bereits geeignete Gegenmaßnahmen wie Reinigen oder Bauteilaustausch getroffen werden können.

In einem alternativen oder zusätzlichen Verfahren ist es möglich, entsprechend unterschiedlicher möglicher Störungen den Lernspeicher, insbesondere das neuronale Netz, unterschiedliche n-dimensionale Bereiche erlernen zu lassen. Ein neu ermittelter n-dimensionaler Messwert-Punkt kann dann mit den verschiedenen zu unterschiedlichen Störungen zugeordneten n-dimensionalen Bereichen verglichen, und eine Wahrscheinlichkeit ermittelt werden, mit der eine der unterschiedlichen Störungen vorliegt.

**Patentansprüche**

1. Verfahren zur Trübungsmessung in einem Messmedium (18) mittels einer Vorrichtung umfassend mindestens einen ersten (E1) und einen zweiten Emitter (E2) und mindestens einen ersten (D1) und einen zweiten Detektor (D2), wobei der erste (E1) und der zweite Emitter (E2) jeweils nacheinander angeregt werden, ein in das Messmedium (18) gerichtetes Lichtsignal zu erzeugen, und wobei das jeweilige Lichtsignal jeweils auf einem ersten Ausbreitungsweg durch das Messmedium (18) zum ersten Detektor (D1) gelangt und von diesem in ein erstes Detektorsignal gewandelt wird, und jeweils auf einem zweiten Ausbreitungsweg durch das Messmedium (18) zum zweiten Detektor (D2) gelangt, und von diesem in ein zweites Detektorsignal gewandelt wird,
wobei unter Verwendung des ersten und des zweiten Detektorsignals ein Trübungswert ermittelt wird,
wobei ein dritter (D3) und ein vierter Detektor (D4) verwendet werden, zu welchen das Lichtsignal des ersten Emitters (E1) und des zweiten Emitters (E2) jeweils auf einem dritten Ausbreitungsweg durch das Messmedium (18) und einem vierten Ausbreitungsweg durch das Messmedium (18) gelangt, wobei der dritte Detektor (D3) das Lichtsignal in ein drittes Detektorsignal und der vierte Detektor (D4) das Lichtsignal in ein viertes Detektorsignal wandelt und aus dem dritten und dem vierten Detektorsignal ein zusätzlicher Trübungswert ermittelt wird, wobei der zusätzliche Trübungswert mit dem aus den Detektorsignalen des ersten (D1) und zweiten Detektors (D2) ermittelten Trübungswert verglichen wird, indem aus den Trübungswerten die den Trübungswerten entsprechenden Feststoff-Konzentrationen ermittelt, und die Differenz zwischen der ersten und der zweiten Feststoff-Konzentration gebildet wird, und wobei zur Prüfung der Plausibilität der Trübungswerte die Differenz der Feststoff-Konzentrationen mit einem vorgegebenen Schwellenwert verglichen wird.

2. Verfahren nach Anspruch 1, wobei der Trübungswert nach der Formel

$$W_1 = \frac{I_{1\_1} \cdot I_{2\_2}}{I_{1\_2} \cdot I_{2\_1}}$$

ermittelt wird,

wobei $I_{1\_1}$ das Detektorsignal des ersten Detektors (D1) bei Anregung des ersten Emitters (E1) ist,
wobei $I_{1\_2}$ das Detektorsignal des ersten Detektors (D1) bei Anregung des zweiten Emitters (E2) ist,
wobei $I_{2\_1}$ das Detektorsignal des zweiten Detektors (D2) bei Anregung des ersten Emitters (E1) ist, und
wobei $I_{2\_2}$ das Detektorsignal des zweiten Detektors (D2) bei Anregung des zweiten Emitters (E2) ist.

3. Verfahren nach Anspruch 1, wobei aus dem dritten und dem vierten Detektorsignal ein zusätzlicher Trübungswert nach der Formel

$$W_1 = \frac{I_{3\_1} \cdot I_{4\_2}}{I_{3\_2} \cdot I_{4\_1}}$$

ermittelt wird,

wobei $I_{3\_1}$ das Detektorsignal des dritten Detektors (D3) bei Anregung des ersten Emitters (E1) ist,
wobei $I_{4\_2}$ das Detektorsignal des vierten Detektors (D4) bei Anregung des zweiten Emitters (E2) ist,

wobei $I_{3\_2}$ das Detektorsignal des dritten Detektors (D3) bei Anregung des zweiten Emitters (E2) ist, und
wobei $I_{4\_1}$ das Detektorsignal des vierten Detektors (D4) bei Anregung des ersten Emitters (E1) ist.

4. Verfahren nach Anspruch 1, wobei eine Fehlermeldung ausgegeben oder die Trübungsmessung wiederholt wird, wenn die Differenz den vorgegebenen Schwellenwert überschreitet.

5. Verfahren nach einem der Ansprüche 1 bis 4, wobei mindestens eines der Detektorsignale mit einem Sollwert verglichen wird.

6. Verfahren nach einem der Ansprüche 1 bis 5, wobei aus allen zur Ermittlung eines Trübungswertes verwendeten Detektorsignalen eine Anzahl von n Detektorsignalen ausgewählt wird, und wobei die ausgewählten Detektorsignale als Koordinaten eines Messwertpunkts in einem n-dimensionalen Koordinatensystem, oder Komponenten eines Messwert-Vektors in einem n-dimensionalen Vektorraum dargestellt werden, und

wobei ein Abstand des Messwert-Punktes oder des Messwert-Vektors zu einem vorgegebenen n-dimensionalen Bereich des Punktraums oder des Vektorraums bestimmt wird, welcher insbesondere aus einem Modell ermittelt oder anhand eines maschinellen Lernverfahrens erlernt wird.

7. Verfahren nach Anspruch 6, wobei anhand des Abstands des Messwert-Punktes oder des Messwert-Vektors vom vorgegebenen n-dimensionalen Bereich eine, insbesondere maschinelle, Plausibilitätsprüfung des aus den Detektorsignalen ermittelten Trübungswerts durchgeführt wird.

8. Vorrichtung (1) zur Messung der Trübung eines Messmediums (18), welche zur Ausführung eines Verfahrens nach zumindest einem der Ansprüche 1 bis 7 ausgestaltet ist, umfassend mindestens einen ersten (E1, 9) und einen zweiten Emitter (E2) und mindestens einen ersten (D1, 11) und einen zweiten Detektor (D2), wobei die Emitter (E1, E2, 9) und die Detektoren (D1, D2, 11) derart zueinander angeordnet sind, dass ein von den Emittern (E1, E2, 9) erzeugtes und in das Messmedium (18) gerichtetes Lichtsignal jeweils auf einem ersten Ausbreitungsweg durch das Messmedium (18) zum ersten Detektor (D1, 11) gelangt, und jeweils auf einem zweiten Ausbreitungsweg durch das Messmedium (18) zum zweiten Detektor (D2) gelangt, und mindestens zwei zusätzlichen Detektoren, (D3, D4, 12, 13) die derart angeordnet sind, dass die von den Emittern E1, (E2, 9) erzeugten Lichtsignale auf einem dritten bzw. auf einen vierten Ausbreitungsweg zum dritten bzw. vierten Detektor gelangen, und eine Auswertungseinheit, welche dazu ausgelegt ist, aus den Detektorsignalen des mindestens ersten (D1, 11) und zweiten Detektors (D2) einen Trübungswert des Messmediums zu bestimmen und aus den Detektorsignalen des dritten (D1, 11) und vierten Detektors (D2) einen zusätzlichen Trübungswert des Messmediums (18) zu bestimmen und, die ermittelten Trübungswerte miteinander zu vergleichen, indem aus den Trübungswerten entsprechenden Feststoff-Konzentrationen ermittelt werden, und eine Differenz zwischen der ersten und der zweiten Feststoff-Konzentration zu bilden, und zur Prüfung der Plausibilität der Trübungswerte die Differenz der Feststoff-Konzentrationen mit einem vorgegebenen Schwellenwert zu vergleichen.

9. Vorrichtung (1) nach Anspruch 8, wobei der erste Emitter (E1, 9) und der erste Detektor (D1, 14) nebeneinander angeordnet sind, und wobei der zweite Emitter (E2) und der zweite Detektor (D2) spiegelbildlich zu dem ersten Emitter (E1) und dem ersten Detektor (D1) angeordnet sind, und

wobei der dritte (D3, 12) und der vierte Detektor (D4) derart angeordnet sind, dass der zweite Emitter (E2), der zweite Detektor (D2) und der vierte Detektor (D4) spiegelbildlich zu dem ersten Emitter (E1, 9), dem ersten Detektor (D1, 11) und dem dritten Detektor (D3, 12) angeordnet sind, und wobei der erste Emitter (E1, 9) dazu ausgelegt ist, im angeregten Zustand einen Lichtstrahl, insbesondere ein Lichtstrahlbündel mit einer Hauptstrahlrichtung (HA) in das Messmedium (18) zu richten, und wobei die Normale einer Stirnseite (14) des ersten Detektors (D1, 11) in einem ersten Winkel zur Hauptstrahlrichtung angeordnet ist, wobei die Normale einer Stirnseite (16) des dritten Detektors (D3, 12) in einem zweiten Winkel zur Hauptstrahlrichtung (HA) angeordnet ist, und wobei der erste Winkel sich vom zweiten Winkel unterscheidet.

**Claims**

1. Procedure designed to measure the turbidity in a medium being measured (18) using an apparatus comprising

at least a first emitter (E1) and a second emitter (E2) and

at least a first detector (D1) and a second detector (D2),
wherein the first emitter (E1) and the second emitter (E2) are each excited one after the other to generate a light signal directed into the medium being measured (18), and wherein, on a first propagation path, the light signal passes through the medium being measured (18) to the first detector (D1) where it is converted into a first detector signal, and wherein, on a second propagation path, the light signal passes through the medium being measured (18) to the second detector (D2) where it is converted into a second detector signal, wherein a turbidity value is determined using the first and the second detector signal, wherein a third detector (D3) and a fourth detector (D4) are used, wherein the light signal of the first emitter (E1) and of the second emitter (E2) passes through the medium being measured (18) on a third propagation path and on a fourth propagation, respectively, to reach said third and fourth detector, wherein the third detector (D3) converts the light signal into a third detector signal and the fourth detector (D4) converts the light signal into a fourth detector signal, and wherein an additional turbidity value is determined from the third and the fourth detector signal, wherein the additional turbidity value is compared against the turbidity value determined from the detector signals of the first detector (D1) and of the second detector (D2), in that the solid concentrations corresponding to the turbidity values are determined from the turbidity values, and the difference is formed between the first and the second solid concentration, and wherein the difference of the solid concentrations are compared with a predefined threshold value to verify the plausibility of the turbidity values.

2. Procedure as claimed in Claim 1, wherein the turbidity value is determined according to the formula

$$W_1 = \frac{I_{1\_1} \cdot I_{2\_2}}{I_{1\_2} \cdot I_{2\_1}}$$

where $1_{1\_1}$ is the detector signal of the first detector (D1) when the first emitter (E1) is excited,
where $1_{1\_2}$ is the detector signal of the first detector (D1) when the second emitter (E2) is excited,
where $1_{2\_1}$ is the detector signal of the second detector (D2) when the first emitter (E1) is excited, and
where $1_{2\_2}$ is the detector signal of the second detector (D2) when the second emitter (E2) is excited.

3. Procedure as claimed in Claim 1, wherein an additional turbidity value is determined from the third and the fourth detector signal
according to the formula

$$W_1 = \frac{I_{3\_1} \cdot I_{4\_2}}{I_{3\_2} \cdot I_{4\_1}}$$

where $1_{3\_1}$ is the detector signal of the third detector (D3) when the first emitter (E1) is excited,
where $1_{4\_2}$ is the detector signal of the fourth detector (D4) when the second emitter (E2) is excited,
where $1_{3\_2}$ is the detector signal of the third detector (D3) when the second emitter (E2) is excited, and
where $1_{4\_1}$ is the detector signal of the fourth detector (D4) when the first emitter (E1) is excited.

4. Procedure as claimed in Claim 1, wherein an error message is output or the turbidity measurement is repeated if the difference exceeds the predefined threshold value.

5. Procedure as claimed in one of the Claims 1 to 4, wherein at least one of the detector signals is compared to a setpoint value.

6. Procedure as claimed in one of the Claims 1 to 5,

wherein a number of n detector signals is selected from all the detector signals used to determine a turbidity value, and
wherein the selected detector signals are presented as the coordinates of a measured value point in an n-dimensional coordinate system, or the components of a measured value vector are presented in an n-dimensional vector space, and
wherein a distance between the measured value point or the measured value vector to a predefined n-dimensional area of the point space or vector space is determined particularly from a model or is learned using a machine learning process.

7. Procedure as claimed in Claim 6, wherein a plausibility check, particularly a machine-based plausibility check, is performed on the turbidity value determined from the detector signals on the basis of the distance of the measured value point or the measured value vector in relation to the predefined n-dimensional area.

8. Apparatus (1) designed to measure the turbidity of a medium being measured (18), wherein said apparatus is designed to perform a procedure as claimed in at least one of the Claims 1 to 7, comprising

at least a first emitter (E1, 9) and a second emitter (E2) and at least a first detector (D1, 11) and a second detector (D2),
wherein the emitters (E1, E2, 9) and the detectors (D1, D2, 11) are arranged in relation to one another in such a way that a light signal generated by the emitters (E1, E2, 9) and directed into the medium being measured (18) reaches the first detector (D1, 11) on a first propagation path through the medium being measured (18) and reaches the second detector (D2) on a second propagation path through the medium being measured (18), and at least two additional detectors (D3, D4, 12, 13) are arranged in such a way that the light signals generated by the emitters (E1, E2, 9) reach the third and the fourth detector on a third and fourth propagation path, respectively, and
an evaluation unit, which is designed to determine a turbidity value of the medium being measured from the detector signals of the at least first detector (D1, 11) and the second detector (D2), and to determine an additional turbidity value of the medium being measured (18) from the detector signals of the third detector (D1, 11) and of the fourth detector (D2), and to compare the determined turbidity values with one another by determining corresponding solid concentrations from the turbidity values, and to form a difference between the first and the second solid concentration, and to compare the difference between the solid concentrations with a predefined threshold value for the purpose of checking the plausibility of the turbidity values.

9. Apparatus (1) as claimed in Claim 8,

wherein the first emitter (E1, 9) and the first detector (D1, 14) are arranged side by side, and
wherein the second emitter (E2) and the second detector (D2) are arranged in a mirror-inverted manner in relation to the first emitter (E1) and the first detector (D1), and wherein the third detector (D3, 12) and the fourth detector (D4) are arranged in such a way that the second emitter (E2), the second detector (D2) and the fourth detector (D4) are arranged in a mirror-inverted manner in relation to the first emitter (E1, 9), the first detector (D1, 11) and the third detector (D3, 12), and
wherein the first emitter (E1, 9) is designed to direct, in the excited state, a light beam, particularly a light beam bundle with a main beam direction (HA), into the medium being measured (18), and wherein the normal of a front face (14) of the first detector (D1, 11) is arranged in a first angle in relation to the main beam direction, wherein the normal of a front face (16) of the third detector (D3, 12) is arranged in a second angle in relation to the main beam direction (HA), and wherein the first angle is different to the second angle.

**Revendications**

1. Procédé destiné à la mesure de turbidité dans un produit (18) au moyen d'un dispositif comprenant

au moins un premier émetteur (E1) et un deuxième émetteur (E2) et
au moins un premier détecteur (D1) et un deuxième détecteur (D2),
le premier émetteur (E1) et le deuxième émetteur (E2) étant chacun successivement excités pour générer un signal lumineux dirigé dans le produit mesuré (18), et le signal lumineux respectif parcourant à chaque fois un premier chemin de propagation à travers le produit mesuré (18) jusqu'au premier détecteur (D1) et étant converti par ce dernier en un premier signal de détecteur, et parcourant à chaque fois un deuxième chemin de propagation à travers le produit mesuré (18) jusqu'au deuxième détecteur (D2) et étant converti par ce dernier en un deuxième signal de détecteur,
une valeur de turbidité étant déterminée en utilisant le premier et le deuxième signal de détecteur,
un troisième détecteur (D3) et un quatrième détecteur (D4) étant utilisés, auxquels le signal lumineux du premier émetteur (E1) et du deuxième émetteur (E2) parvient respectivement sur un troisième chemin de propagation à travers le produit mesuré (18) et un quatrième chemin de propagation à travers le produit mesuré (18), le troisième détecteur (D3) convertissant le signal lumineux en un troisième signal de détecteur et le quatrième détecteur (D4) convertissant le signal lumineux en un quatrième signal de détecteur, et une valeur de turbidité supplémentaire étant déterminée à partir du troisième et du quatrième signal de détecteur,

la valeur de turbidité supplémentaire étant comparée à la valeur de turbidité déterminée à partir des signaux du premier détecteur (D1) et du deuxième détecteur (D2), en ce que les concentrations solides correspondant aux valeurs de turbidité sont déterminées à partir des valeurs de turbidité, et la différence entre la première et la deuxième concentration solide étant formée, et la différence des concentrations solides étant comparée à une valeur de seuil prédéfinie pour vérifier la plausibilité des valeurs de turbidité.

**2.** Procédé selon la revendication 1, pour lequel la valeur de turbidité est déterminée selon la formule

$$W_1 = \frac{I_{1\_1} \cdot I_{2\_2}}{I_{1\_2} \cdot I_{2\_1}}$$

où $1_{1\_1}$ est le signal du premier détecteur (D1) lorsque le premier émetteur (E1) est excité,
où $1_{1\_2}$ est le signal du premier détecteur (D1) lorsque le deuxième émetteur (E2) est excité,
où $1_{2\_1}$ est le signal du deuxième détecteur (D2) lorsque le premier émetteur (E1) est excité, et
où $1_{2\_2}$ est le signal du deuxième détecteur (D2) lorsque le deuxième émetteur (E2) est excité.

**3.** Procédé selon la revendication 1, pour lequel une valeur de turbidité additionnelle est déterminée à partir du troisième et du quatrième signal de détecteur selon la formule

$$W_1 = \frac{I_{3\_1} \cdot I_{4\_2}}{I_{3\_2} \cdot I_{4\_1}}$$

où $1_{3\_1}$ est le signal du troisième détecteur (D3) lorsque le premier émetteur (E1) est excité,
où $1_{4\_2}$ est le signal du quatrième détecteur (D4) lorsque le deuxième émetteur (E2) est excité,
où $1_{3\_2}$ est le signal du troisième détecteur (D3) lorsque le deuxième émetteur (E2) est excité, et
où $1_{4\_1}$ est le signal du quatrième détecteur (D4) lorsque le premier émetteur (E1) est excité.

**4.** Procédé selon la revendication 1, pour lequel un message d'erreur est émis ou la mesure de turbidité est répétée si la différence dépasse la valeur de seuil prédéfinie.

**5.** Procédé selon l'une des revendications 1 à 4, pour lequel au moins l'un des signaux de détecteur est comparé à une valeur de consigne.

**6.** Procédé selon l'une des revendications 1 à 5,

pour lequel un nombre de n signaux de détecteur est sélectionné parmi tous les signaux de détecteur utilisés pour déterminer une valeur de turbidité, et
pour lequel les signaux de détecteur sélectionnés sont représentés comme des coordonnées d'un point de valeur mesurée dans un système de coordonnées à n dimensions, ou des composantes d'un vecteur de valeur mesurée dans un espace vectoriel à n dimensions, et
pour lequel on détermine une distance du point de valeur mesurée ou du vecteur de valeur mesurée par rapport à une zone prédéfinie à n dimensions de l'espace ponctuel ou de l'espace vectoriel, qui est déterminée notamment à partir d'un modèle ou apprise au moyen d'une méthode d'apprentissage automatique.

**7.** Procédé selon la revendication 6, pour lequel un contrôle de plausibilité, notamment un contrôle de plausibilité automatique, de la valeur de turbidité déterminée à partir des signaux de détecteur est effectué sur la base de la distance du point de valeur mesurée ou du vecteur de valeur mesurée par rapport à la zone à n dimensions prédéfinie.

**8.** Dispositif (1) destiné à la mesure de la turbidité d'un produit (18), lequel dispositif est conçu pour la mise en œuvre d'un procédé selon au moins l'une des revendications 1 à 7, lequel dispositif comprend

au moins un premier émetteur (E1, 9) et un deuxième émetteur (E2) et au moins un premier détecteur (D1, 11) et un deuxième détecteur (D2),
les émetteurs (E1, E2, 9) et les détecteurs (D1, D2, 11) étant disposés les uns par rapport aux autres de telle sorte qu'un signal lumineux généré par les émetteurs (E1, E2, 9) et dirigé dans le produit mesuré (18) atteint le premier détecteur (D1, 11) respectivement sur un premier chemin de propagation à travers le produit mesuré (18) et atteint le deuxième détecteur (D2) respectivement sur un deuxième chemin de propagation à travers le produit mesuré (18),

et au moins deux détecteurs supplémentaires (D3, D4, 12, 13), lesquels sont disposés de telle sorte que les signaux lumineux générés par les émetteurs (E1, E2, 9) atteignent le troisième et le quatrième détecteur sur un troisième et quatrième chemin de propagation, et

une unité d'évaluation, laquelle est conçue pour déterminer une valeur de turbidité du produit mesuré à partir des signaux de détecteur de l'au moins premier détecteur (D1, 11) et de l'au moins deuxième détecteur (D2), et pour déterminer une valeur de turbidité supplémentaire du produit mesuré (18) à partir des signaux de détecteur du troisième détecteur (D1, 11) et du quatrième détecteur (D2), et pour comparer les valeurs de turbidité déterminées les unes avec les autres en déterminant des concentrations solides correspondantes à partir des valeurs de turbidité, et pour former une différence entre la première et la deuxième concentration solide, et pour comparer la différence entre les concentrations solides avec une valeur de seuil prédéfinie afin de vérifier la plausibilité des valeurs de turbidité.

9. Dispositif (1) selon la revendication 8,

pour lequel le premier émetteur (E1, 9) et le premier détecteur (D1, 14) sont disposés côte à côte, et

pour lequel le deuxième émetteur (E2) et le deuxième détecteur (D2) sont disposés en symétrie miroir par rapport au premier émetteur (E1) et au premier détecteur (D1), et pour lequel le troisième détecteur (D3, 12) et le quatrième détecteur (D4) sont disposés de telle sorte que le deuxième émetteur (E2), le deuxième détecteur (D2) et le quatrième détecteur (D4) sont disposés en symétrie miroir par rapport au premier émetteur (E1, 9), au premier détecteur (D1, 11) et au troisième détecteur (D3, 12), et

pour lequel le premier émetteur (E1, 9) est conçu pour diriger, à l'état excité, un faisceau lumineux, notamment un faisceau lumineux avec une direction de faisceau principal (HA), dans le produit mesuré (18), et la normale d'une face frontale (14) du premier détecteur (D1 , 11) étant disposée selon un premier angle par rapport à la direction du faisceau principal,

la normale d'une face frontale (16) du troisième détecteur (D3, 12) étant disposée selon un deuxième angle par rapport à la direction du faisceau principal (HA), et le premier angle étant différent du deuxième angle.

1

13

9

11  14  7  12

10

5

17  21

3

4

16

8

19

α2

α1

HA

18

Fig. 1

21

17

19

S

5

8

4

7

Fig. 2

Fig. 3a

Fig. 3b

Fig. 4a

Fig. 4b

Fig. 4c

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4232957 C2
- DE 4142938 C2
- US 5140 A
- US 168 A
- US 5416581 A
- WO 0163253 A